# DEMANDE DE BREVET EUROPEEN

(11) **EP 1 188 886 A1**
(43) Date de publication de la demande: **20.03.2002**
(21) Numéro de dépôt: 01402375.8
(22) Date de dépôt: 14.09.2001
(51) Int. Cl.: E05B 17/00, B60R 7/06

(54) **Dispositif de commande d'un système de verrouillage**

(30) Priorité: 19.09.2000 FR 0011945
(71) Demandeur: Faurecia Industries, 92100 Boulogne-Billancourt (FR)
(72) Inventeur: Martinet, Gilles, 25420 Voujeaucourt (FR)
(74) Mandataire: Jacobson, Claude

(57) **Abrégé**

Ce dispositif de commande d'un système de verrouillage (12) d'une paroi basculante (14) d'une pièce d'équipement pour véhicule automobile comporte, d'une part, un organe d'actionnement (20) du système de verrouillage (12) monté mobile en rotation sur la paroi entre une position de blocage de la paroi en position fermée et une position de libération de ladite paroi, et, d'autre part, un système d'amortissement (26) de la rotation de l'organe d'actionnement (20), comprenant deux éléments de friction (38, 46) qui coopèrent l'un avec l'autre selon un frottement déterminé. Le premier (38) desdits éléments de friction est fixé sur la paroi (14). L'organe d'actionnement (20) est solidaire en rotation avec le second (46) desdits éléments de friction.

Application aux portes de vide-poches de véhicules automobiles.

## Description

La présente invention concerne un dispositif de commande d'un système de verrouillage d'une paroi basculante d'une pièce d'équipement pour véhicule automobile, comme par exemple une paroi de fermeture d'un vide-poches, du type comportant, d'une part, un organe d'actionnement du système de verrouillage monté mobile en rotation sur la paroi entre une position de blocage de la paroi en position fermée et une position de libération de ladite paroi, et, d'autre part, un système d'amortissement de la rotation de l'organe d'actionnement, comprenant deux éléments de friction qui coopèrent l'un avec l'autre selon un frottement déterminé, le premier desdits éléments de friction étant fixé sur la paroi, l'organe d'actionnement étant solidaire en rotation avec le second desdits éléments de friction.

Elle s'applique notamment aux dispositifs de verrouillage de vide-poches des véhicules automobiles.

On connaît dans l'état de la technique des dispositifs de verrouillage de portes de vide-poches qui comprennent un levier portant une palette de commande, articulé sur la porte de vide-poches. Ce levier comporte en outre un ergot qui est, à l'état fermé et verrouillé de la porte, en prise avec un organe complémentaire solidaire de la planche de bord. Ce levier est rappelé dans la position de verrouillage par un ressort de rappel.

Lorsque l'utilisateur souhaite ouvrir le vide-poches il tire la palette et, en conséquence, l'ergot vient hors prise de l'organe complémentaire, déverrouillant ainsi la porte.

A cause des tolérances de fabrication et de l'usure de l'articulation, celle-ci présente un jeu qui mène à des bruits de vibrations et à une sensation désagréable lors de manipulation de la palette.

Afin de remédier à cet inconvénient, on a proposé d'installer des dispositifs d'amortissement qui sont constitués d'un secteur denté solidaire du levier, qui engrène avec un pignon monté sur un module d'une roue à graisse. Cette roue à graisse ralentit et amortit les mouvements de basculement du levier par l'intermédiaire du secteur denté et du pignon.

Toutefois, ces dispositifs d'amortissement comportent un grand nombre de pièces et nécessitent un nombre important d'opérations de montage.

De plus, le jeu présent entre le pignon et le secteur denté ne supprime pas totalement les vibrations du levier.

L'invention a donc pour but de pallier ces inconvénients et de proposer un dispositif de verrouillage qui ait un meilleur amortissement et qui soit facile à monter.

A cet effet l'invention à pour objet un ensemble du type précité, caractérisé en ce que le système d'amortissement est un module de galet à graisse dans lequel ledit premier élément de friction est formé par un corps et ledit second élément de friction est formé par un galet disposé dans un logement de forme complémentaire ménagé dans le corps, et comportant un axe relié à l'organe d'actionnement.

Des modes particuliers de réalisation de l'invention sont indiqués dans les revendications dépendantes 2 à 8.

L'invention sera mieux comprise à la lecture de la description qui va suivre, donnée uniquement à titre d'exemple et faite en se référant aux dessins annexés, sur lesquels :
- la Figure 1 est une vue schématique en perspective d'une planche de bord d'un véhicule automobile comportant un premier mode de réalisation d'un dispositif de commande selon l'invention ;
- la Figure 2 est une vue partielle en coupe selon le plan II-II de la Figure 1, à plus grande échelle ;
- la Figure 3 est une vue en coupe selon la ligne III-III de la Figure 2 ;
- la Figure 4 est une vue en coupe d'un deuxième mode de réalisation d'un dispositif de commande selon l'invention ;
- la Figure 5 est une vue en coupe selon la Figure V-V de la Figure 4.

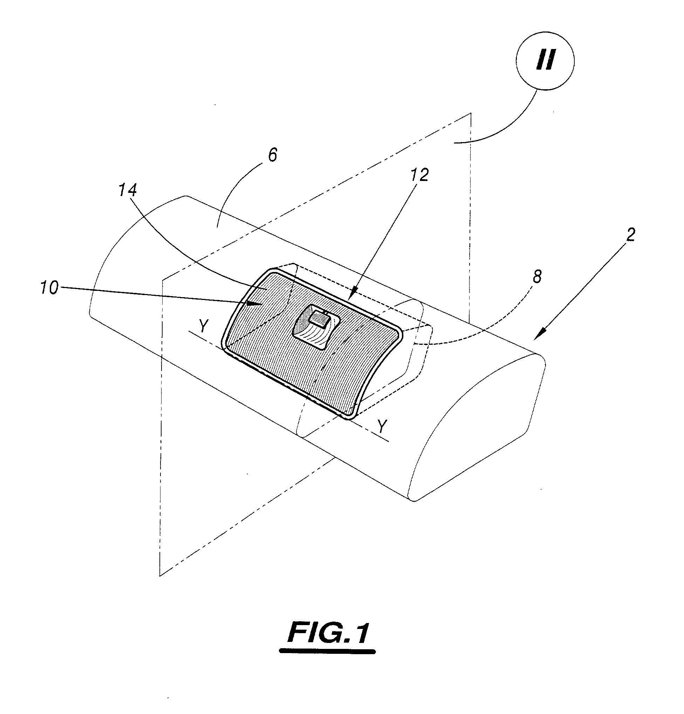

Sur la Figure 1 on a représenté un ensemble d'une pièce d'équipement pour véhicule automobile selon l'invention désigné par la référence générale 2. L'ensemble comprend une planche de bord 6 d'un véhicule automobile délimitant un réceptacle vide-poches 8. L'ensemble comprend en outre une porte 10 de vide-poches articulée sur la planche de bord 6 et basculable autour d'un axe Y-Y entre une position de fermeture comme représenté et une position d'ouverture.

L'ensemble 2 comprend en outre un dispositif ou système de verrouillage 12 de la porte 10 dans sa position de fermeture.

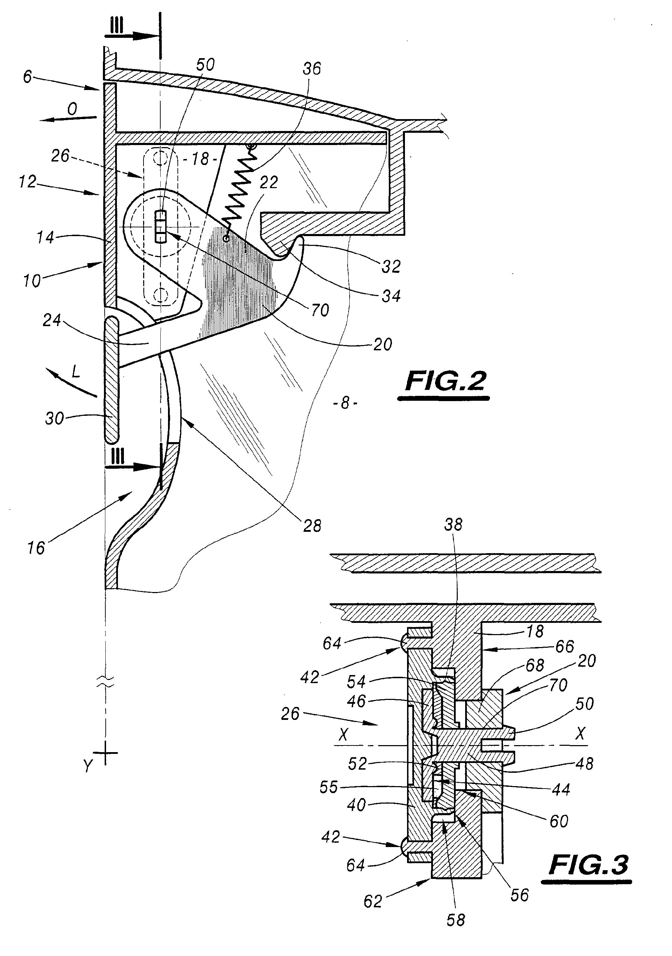

Comme on le voit plus en détail sur la Figure 2, la porte 10 comprend une paroi de fermeture 14 recouvrant l'ouverture du réceptacle vide-poches 8 dans sa position de fermeture. Un creux de poignée 16 dirigé vers le passager est ménagé dans la paroi 14.

La porte 10 comprend en outre une nervure de montage 18 du dispositif de verrouillage 12, nervure qui fait saillie sur la paroi de fermeture 14 perpendiculairement vers l'intérieur du réceptacle 8.

Le dispositif de verrouillage 12 comprend un levier de verrouillage 20 sensiblement en forme de V. Le levier 20 comporte deux jambes, à savoir une première jambe 22 et une seconde jambe 24.

La première jambe 22 du levier est articulée par son extrémité autour d'un axe X-X sur la nervure 18 par un module de galet à graisse 26. Cet axe d'articulation X-X s'étend parallèlement au plan de la paroi de fermeture 14.

Le levier 20 peut être déplacé entre une position de verrouillage, comme représentée, et une position de libération dans laquelle il est déplacé dans le sens des aiguilles d'une montre (flèche L) par rapport à la position de verrouillage.

La seconde jambe 24 du levier s'étend à travers une ouverture 28 ménagée dans le creux de poignée 16 et porte une palette de commande 30. Cette palette 30 s'étend dans la position de verrouillage sensiblement dans le plan de la paroi de fermeture 14.

La partie de sommet du V du levier 20 porte un ergot de verrouillage 32 saillant sensiblement vers le haut, et s'accrochant dans la position de verrouillage derrière une partie de la planche de bord 6 formant crochet 34.

Un ressort de rappel 36 est fixé, d'une part, sur la première jambe 22 et, d'autre part, sur la porte 10, et sollicite le levier de verrouillage 20 vers sa position de verrouillage.

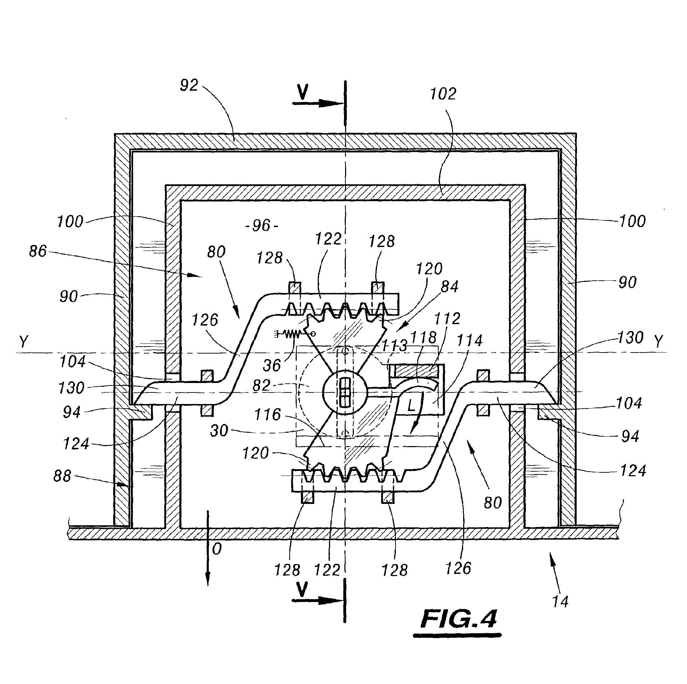

Sur la Figure 3, on voit plus en détail l'articulation du levier 20 par rapport à la nervure 18 par l'intermédiaire du module de galet à graisse 26.

Le module de galet à graisse 26 comporte un corps de base annulaire 38 à section transversale circulaire muni d'une bride de fixation 40. De façon classique, deux trous de fixation 42 sont ménagés dans cette bride 40.

Le corps de base 38 comporte en outre un logement 44 sensiblement cylindrique dans lequel est disposé, à rotation et coaxialement à l'axe X-X, un galet à graisse 46. Le galet à graisse 46 comporte un axe de fixation plan 48 qui fait saillie hors du logement 44 et qui comporte une extrémité extérieure fendue d'encliquetage 50 (voir Figure 2). Un disque annulaire 52 ajouré appelé « satellite » est disposé sur le galet à graisse 46 et solidarisé en rotation de celui-ci par des bossages 53 du galet 46 qui pénètrent dans des évidements du satellite. Le galet 46 et le satellite 52 sont retenus dans le logement 44 par un couvercle 54. Le logement 44 est empli de graisse 55.

La nervure 18 comporte un trou étagé 56 à deux étages 58, 60 d'axe confondu avec l'axe d'articulation X-X. Le premier étage 58 a un diamètre légèrement plus grand que le diamètre extérieur du corps de base 38, et a une hauteur correspondante.

Le corps de base 38 est fixé par l'intermédiaire de la bride 40 sur une surface 62 de la nervure 18 par des rivets 64 venues de matière avec celle-ci. En variante, le corps de base 38 peut être fixé par d'autres moyens, par exemple vissage, encliquetage, etc.

Le corps de base 38 est fixé sur la nervure 18 de telle sorte qu'il soit reçu dans le premier étage 58 du trou étagé 56 et que l'axe de fixation 48 s'étende à travers ce trou 56.

Le levier de commande 20 est fixé sur l'extrémité de l'axe de fixation 48 et ceci du côté de la surface 66 de la nervure qui est opposé à la surface 62. Le levier 20 est muni d'une saillie cylindrique 68.

Cette saillie cylindrique 68 est disposée coaxialement à l'axe X-X et a une épaisseur sensiblement inférieure au second étage 60 du trou étagé 56, de sorte qu'il subsiste un jeu de fonctionnement entre la saillie 68 et le couvercle 54. La saillie est reçue dans ce second étage 60.

La première jambe 22 du levier et la saillie 68 comportent en outre une ouverture de fixation 70 s'étendant coaxialement à l'axe X-X. Cette ouverture 70 présente une section transversale aplatie (voir Figure 2) de forme complémentaire à l'axe de fixation 48 du galet à graisse. A l'état monté, l'axe de fixation 48 s'étend à travers cette ouverture 70 et est fixé axialement par son extrémité d'encliquetage 50.

En variante, la fixation du levier 20 sur l'axe 48 peut-être effectuée par d'autres moyens, par exemple par ajustement serré ou par vissage.

L'ensemble selon l'invention est assemblé de la façon suivante :

Tout d'abord, on enfile les jambes du levier 20 à travers l'ouverture 28 du creux 16 et on enfile la saillie 68 dans le second étage 60 du trou étagé.

Puis on met le module de galet à graisse 26 en place en enfilant la bride 40 sur les rivets 64 de la nervure 18 de façon à ce que l'axe 48 du galet traverse le trou étagé 56 et l'ouverture de fixation 70 et se positionne par encliquetage de sa tête 50. Ensuite, on fixe la bride 40 sur la nervure 18 par rivetage.

On accroche le ressort de rappel 36 à la porte 10 et au levier 20, avant le montage de la porte 10 sur la planche de bord.

On constate que le montage de l'ensemble selon l'invention s'effectue de façon facile et rapide.

Le dispositif selon l'invention fonctionne de la façon suivante :

Lorsque l'utilisateur souhaite ouvrir la porte 10 de vide-poches, il tire la palette de commande 30 vers l'extérieur suivant la flèche L de la figure 2 à l'encontre de la force de rappel du ressort 36 et de la force amortissante du galet à graisse 46. Lorsque l'ergot 32 du levier 20 vient hors de prise avec le crochet 34, l'utilisateur peut ouvrir la porte suivant la flèche 0 de la Figure 2.

Le fait que le levier 20 est directement monté sur l'axe de fixation 48 permet d'avoir un jeu minimal entre le levier 20 et le module de galet à graisse 26. Ceci rend l'actionnement du levier 20 agréable et contribue à la diminution des bruits de cliquetage.

Pendant la manipulation de la palette de commande 30, ce jeu minimal donne à l'utilisateur une impression de stabilité du mécanisme.

Le module de galet à graisse 26 amortit les vibrations de la voiture éventuellement transférées sur le levier 20 et diminue des bruits de cliquetage de celui-ci.

La surface cylindrique de l'entretoise 68 du levier 20 s'applique contre la surface intérieure du second étage 60 du trou étagé 56 et diminue les efforts radiaux exercés sur l'axe de fixation 48 du galet à graisse.

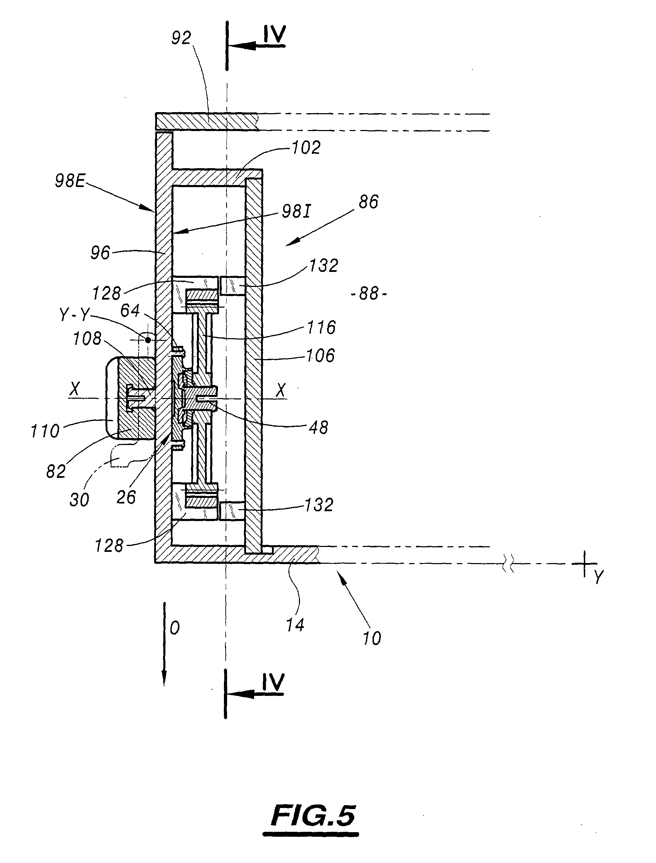

Sur les Figures 4 et 5, on a représenté un deuxième mode de réalisation d'un système de verrouillage selon l'invention. Les éléments analogues à ceux du premier mode de réalisation sont désignés par des références identiques.

Dans cet ensemble, le verrouillage est effectué par deux pênes 80 montés sur la porte 10 et déplaçables en translation entre une position de blocage (comme représentée) et une position de libération. Un bouton de commande 82 mobile en rotation autour d'un axe X-X permet de commander les pênes 80. L'ensemble comporte en outre des moyens de transformation du mouvement en rotation du bouton de commande 82 en un mouvement de translation des pênes 80.

L'ensemble est monté sur un boîtier 86 fixé perpendiculairement par rapport à la paroi de fermeture 14 de la porte 10, à une extrémité opposée à l'axe de basculement Y-Y de cette dernière. Le boîtier 86 est reçu dans un évidement 88 ménagé dans le réceptacle de vide-poches lorsque la porte 10 se trouve dans sa position de fermeture. Cet évidement 88 est de forme complémentaire au boîtier 86.

L'évidement 88 est constitué de deux parois latérales 90 et d'une paroi transversale supérieure 92, et il est ouvert vers le bas, dans le sens de l'ouverture (flèche O) de la porte de vide-poches 10, c'est-à-dire vers le bas sur les Figures 4 et 5. Chaque paroi latérale 90 comporte une saillie de retenue 94, les deux saillies étant en vis-à-vis.

Le boîtier 86 comprend une paroi principale avant 96 s'étendant verticalement dans la position fermée de la porte, en saillie vers le haut sur la paroi 14, supposée horizontale en position de fermeture. La paroi 96 a une surface extérieure 98E dirigée vers l'habitacle du véhicule et une surface intérieure 98I. Le boîtier 86 comprend en outre deux parois 100 latérales et une paroi transversale supérieure 102 s'étendant vers l'intérieur du réceptacle à partir de la paroi principale 96. Ces parois 100, 102 se trouvent en vis-à-vis des parois correspondantes 90, 92 de l'évidement 88 dans la position fermée de la porte. Un orifice 104 est ménagé dans chaque paroi latérale 100. Les orifices 104 se trouvent sensiblement dans un plan contenant l'axe X-X. Le boîtier 86 est fermé par un couvercle arrière 106 disposé sur les trois parois 100, 102 et contre la paroi 14 de la porte (Figure 5). Ce couvercle est fixé par des moyens connus (non représentés).

Comme on le voit en outre sur la Figure 5, le bouton de commande 82 est encliqueté sur une broche 108 d'axe X-X solidaire de la paroi principale 96 et faisant saillie sur la surface extérieure 98E de celle-ci. Il comporte une partie de préhension 110.

Une plaquette 112 formant poussoir qui fait saillie est reliée par un bras radial 113 au bouton de commande 82. La plaquette 112 traverse un orifice 114 ménagé dans la paroi principale 96 du boîtier 86 à une certaine distance de l'axe X-X.

L'ensemble comprend en outre un organe d'actionnement 116 à secteurs dentés monté mobile en rotation autour de l'axe X-X par un module de galet à graisse 26 identique à celui du premier mode de réalisation. Le module 26 est fixé sur la surface intérieure 98I de la paroi principale 96 par des rivets 64. L'organe d'actionnement comporte une saillie bombée 118 qui s'étend radialement par rapport à l'axe X-X à l'emplacement de l'orifice 114. La plaquette d'actionnement 112 s'appuie contre la saillie bombée 118. Ainsi un mouvement de rotation du bouton de commande 82 est transmis à l'organe d'actionnement 116.

Les moyens de transformation 84 comprennent deux secteurs dentés 120, situés de part et d'autre de l'axe X-X et solidaires de l'organe d'actionnement 116. Les moyens de transformation 84 comprennent en outre une portion formant crémaillère 122 solidaire de chacun des pênes 80.

Chaque secteur denté 120 engrène dans une des deux crémaillères 122. Un mouvement de rotation de l'organe 116 est ainsi transformé en un mouvement en translation des pênes 80.

Chacun des pênes 80 comporte en outre une portion de verrouillage 124.

Les deux portions 122, 124 sont parallèles l'une à l'autre mais décalées parallèlement au plan de la paroi principale 96. Les portions 122, 124 sont reliées l'une à l'autre par une partie intermédiaire 126.

Les pênes 80 s'étendent parallèlement à la paroi principale 96 du boîtier. Ils sont mobiles en translation et sont guidés par des saillies 128 de guidage de la paroi principale 96 du boîtier.

Dans la position de blocage, les extrémités des portions de verrouillage 124 s'étendent à travers les deux ouvertures 104 ménagées dans les deux parois latérales 100. Dans cette position, les extrémités sont en prise avec les saillies de retenue 94. Les portions de verrouillage 124 comportent une partie formant came 130 sur leur extrémité opposée à la saillie de retenue 94 dans la position de blocage. Ces cames 130 permettent une fermeture de la porte 10 par simple basculement vers le haut sans actionnement du bouton 82.

En outre, le couvercle 106 du boîtier 86 comporte des saillies de guidage 132 qui s'étendent vers les pênes 80 à des emplacements correspondants aux saillies de guidage 128 de la paroi principale 96. Ainsi les pênes 80 sont fixés dans la direction axiale suivant l'axe X-X.

Un ressort de rappel 36 de l'organe à secteurs dentés 116 dans sa position de verrouillage est fixé d'une part sur l'organe 116 et d'autre part sur la paroi principale 96 du boîtier.

Le montage de cet ensemble s'effectue de la façon suivante :

Tout d'abord, on rive le module de galet à graisse 26 sur la paroi principale 96 du boîtier. Puis, on enfile les pênes 80 entre les saillies de guidage 128, et on encliquette l'organe d'actionnement 116 sur l'axe 48 du galet à graisse.

Ensuite, on accroche le ressort de rappel 36 sur la paroi principale 96 et sur l'organe d'actionnement 116.

Puis on ferme le boîtier 86 par la mise en place du couvercle 106, les pênes 80 étant immobilisés axialement par les saillies de guidage 128, 132.

Enfin, on encliquette le bouton de commande 82 sur la broche 108 de façon à ce que la plaquette 112 traverse l'orifice 114 et s'appuie contre la saillie bombée 118.

On constate que cet ensemble est également facile et rapide à monter.

Ce dispositif fonctionne de la façon suivante :

Lorsque la porte 10 est dans sa position fermée, les portions de verrouillage 124 s'appliquent contre les saillies de retenue 94.

Lorsque l'utilisateur souhaite ouvrir le vide-poches, il tourne le bouton de commande 82 dans le sens anti horaire (flèche L de la Figure 4). L'organe 116 est entraîné dans le même sens par l'intermédiaire de la saillie bombée 118, et les secteurs dentés 120 font glisser les pênes 80 dans la position de libération. La porte 10 peut être ouverte.

Le module de galet à graisse 26 amortit le mouvement de rotation lors de l'actionnement du bouton 82 et les vibrations éventuelles de la voiture transmises au bouton de commande.

La fermeture de la porte 10 est effectuée par simple basculement de celle-ci vers le haut. Les pênes 80 sont déplacés dans un premier temps par les cames 130 dans leur position de libération et s'encliquettent derrière les saillies de verrouillage 94 dans la position de blocage.

En variante, le module de galet à graisse 26 peut être un module de galet à graisse libre en rotation dans un sens de rotation et dont la rotation dans l'autre sens est amortie. Dans ce cas, le sens amorti est le sens de rotation de déverrouillage du dispositif de verrouillage.

En variante, les moyens de transformation du mouvement de rotation du bouton 82 en un mouvement de translation des pênes 80 peuvent comprendre d'autres moyens que des crémaillères coopérant avec des secteurs dentés. Ils peuvent par exemple comprendre une rotule portée par le pêne ou par l'organe d'actionnement, reçue dans une cuvette portée par l'autre des deux organes.

Par ailleurs, le bouton de commande 82 peut être remplacé par une palette 30 articulée sur la paroi principale 96 autour d'un axe Y-Y parallèle à cette dernière et décalé par rapport à la saillie 118 (voir Figures 4, 5 en trait mixte).

De cette façon, on obtient un dispositif ayant une manipulation et un style analogues à ceux du premier mode de réalisation.

## Revendications

1. Dispositif de commande d'un système de verrouillage (12) d'une paroi basculante d'une pièce d'équipement pour véhicule automobile, comme par exemple une paroi de fermeture (14) d'un vide-poches, du type comportant, d'une part, un organe d'actionnement (20 ; 116) du système de verrouillage (12) monté mobile en rotation sur la paroi entre une position de blocage de la paroi (14) en position fermée et une position de libération de ladite paroi (14), et, d'autre part, un système d'amortissement (26) de la rotation de l'organe d'actionnement (20 ; 116), comprenant deux éléments de friction (38, 46) qui coopèrent l'un avec l'autre selon un frottement déterminé, le premier (38) desdits éléments de friction étant fixé sur la paroi (14), l'organe d'actionnement (20 ;116) étant solidaire en rotation avec le second (46) desdits éléments de friction, **caractérisé en ce que** le système d'amortissement est un module de galet à graisse (26) dans lequel ledit premier élément de friction est formé par un corps (38) et ledit second élément de friction est formé par un galet (46) disposé dans un logement (44) de forme complémentaire ménagé dans le corps, et comportant un axe (48) relié à l'organe d'actionnement (20 ;116).

2. Dispositif selon la revendication 1, **caractérisé en ce que** ledit premier élément (38) du système d'amortissement est muni d'une bride de fixation (40) sur une nervure (18) ménagée sur la face interne de la paroi (14) et comporte un orifice de passage (56) de l'axe (48) dudit second élément de friction (46) sur lequel est fixé l'organe d'actionnement (20).

3. Dispositif selon la revendication 2, **caractérisé en ce que** la nervure (18) comporte un évidement de réception (58) du corps (38), cet évidement (58) étant coaxial à l'orifice de passage (56) de l'axe (48) dudit second élément de friction (46).

4. Dispositif selon la revendication 2 ou 3, **caractérisé en ce que** l'organe d'actionnement (20) comporte, à son extrémité fixée sur l'axe (48) dudit second élément de friction (46), une partie en saillie cylindrique (68) disposée dans un évidement de forme complémentaire ménagé dans la nervure (18) coaxialement audit axe (48) dudit second élément de friction (46).

5. Dispositif selon l'une quelconque des revendications précédentes, **caractérisé en ce que** le système de verrouillage (12) comprend au moins un pêne de verrouillage (80) monté mobile en translation par rapport à la paroi (14) et
relié à l'organe d'actionnement (116) par des moyens (84) de transformation d'un mouvement de rotation de l'organe d'actionnement (116) en un mouvement de translation du pêne (80).

6. Dispositif selon la revendication 5, **caractérisé en ce que** les moyens de transformation (84) comprennent au moins un secteur denté (120) solidaire de l'organe d'actionnement (116) et coopérant avec une crémaillère (122) solidaire du pêne.

7. Dispositif selon la revendication 6, **caractérisé en ce que** les moyens de transformation comprennent une rotule solidaire d'un élément formé par le pêne (80) ou l'organe d'actionnement (116) coopérant avec une cuvette rotule solidaire de l'autre desdits éléments.

8. Dispositif selon l'une quelconque des revendications précédentes, **caractérisé en ce que** le système d'amortissement comporte un mécanisme de débrayage desdits deux éléments de friction dans un sens de rotation du système de verrouillage.
